# NEUE EUROPÄISCHE PATENTSCHRIFT

(11) **EP 2 435 792 B2**
(45) Veröffentlichungstag und Bekanntmachung des Hinweises auf die Entscheidung über den Einspruch: **26.02.2020**
(45) Hinweis auf die Patenterteilung: 17.08.2016
(21) Anmeldenummer: 10720745.8
(22) Anmeldetag: 14.05.2010
(51) Int. Cl.: G01D 4/00

(54) **RECHNERGESTÜTZTE ÜBERWACHUNG DES ENERGIEVERBRAUCHS EINES BEFÖRDERUNGSMITTELS**
COMPUTER-SUPPORTED ENERGY CONSUMPTION MONITORING OF A MEANS OF TRANSPORTATION
SURVEILLANCE ASSISTÉE PAR ORDINATEUR DE LA CONSOMMATION D'ÉNERGIE D'UN MOYEN DE TRANSPORT

(30) Priorität: 29.05.2009 DE 102009023304
(43) Veröffentlichungstag der Anmeldung: 04.04.2012
(73) Patentinhaber: Siemens Mobility GmbH, 81739 München (DE)
(72) Erfinder: HAAF, Stefan, 97253 Gaukönigshofen (DE); KESSNER, Martin, 80336 München (DE)
(86) Internationale Anmeldenummer: PCT/EP2010/056646
(87) Internationale Veröffentlichungsnummer: WO 2010/136343

(56) Entgegenhaltungen:
- WO-A1-02/097377
- DE-A1-102005 055 243
- US-A1- 2008 125 958
- US-A1- 2008 221 787

## Beschreibung

Bei einem Beförderungsmittel wie etwa einem Schienenfahrzeug oder einem Kraftfahrzeug (z.B. Linienbus oder LKW) ist es bekannt, einem Fahrer einen Energieverbrauch des Beförderungsmittels anzuzeigen. Dies erfolgt beispielsweise auf einem Bildschirm am Führerstand des Schienenfahrzeugs oder im Cockpit des Kraftfahrzeugs. Hierbei werden bei elektrisch angetriebenen Fahrzeugen üblicherweise eine aufgenommene Energie, eine rückgespeiste Energie und ein daraus resultierender Netto-Energieverbrauch ausgegeben. Bei Schienenfahrzeugen mit Dieselantrieb oder bei LKW wird der Energieverbrauch gewöhnlich in Liter Diesel pro 100 km angezeigt.

So offenbart die WO 02/097377 A1 ein Verfahren zur rechnergestützten Überwachung eines Energieverbrauchs eines Beförderungsmittels, bei dem von einer Messeinrichtung Messdaten empfangen werden, die einen aktuellen Energieverbrauch des Beförderungsmittels angeben.

Die DE 10 2005 055243 A1 offenbart ein Verfahren zur Bestimmung eines energetisch günstigen Streckenverlaufs für ein Beförderungsmittel, bei dem zur Routenplanung vor Fahrtantritt einer Datenbank Vergleichsdaten entnommen werden, die einen Energieverbrauch von Beförderungsmitteln auf vorangegangenen Fahrten auf einer vorgegebenen Strecke angeben. Die Datenbank wird befüllt, indem bei Probefahrten von einer Messeinrichtung Messdaten empfangen werden, die einen aktuellen Energieverbrauch eines Beförderungsmittels angeben. Aus den Messdaten werden mithilfe einer Recheneinheit Energieverbrauchsdaten ermittelt, die einen Energieverbrauch des Beförderungsmittels auf der Strecke angeben. Diese Energieverbrauchsdaten werden statistisch ausgewertet und in der Datenbank abgespeichert.

Die Druckschrift US 2008/0125958 A1 offenbart ein Verfahren zur Routenplanung für ein Fahrzeug, bei der die Route mit der besten Kraftstoffeffizienz ermittelt wird. Bei dieser Ermittlung werden historische Daten aus früheren Routen berücksichtigt.

In dem Dokument US 2008/0221787 A1 ist ein Verfahren zur Routenplanung für ein Fahrzeug beschrieben, wobei die Route mit dem geringsten Kraftstoffverbrauch für das Fahrzeug ermittelt wird. Dabei werden eine geschätzte Kraftstoffeffizienz für das Fahrzeug für unterschiedliche Fahrzeuggeschwindigkeiten sowie geschätzte Geschwindigkeiten für die Route berücksichtigt.

Der Erfindung liegt die Aufgabe zugrunde, die Überwachung des Energieverbrauchs des Beförderungsmittels zu verbessern.

Diese Aufgabe wird mit dem Verfahren zur rechnergestützten Überwachung eines Energieverbrauchs eines Beförderungsmittels nach Anspruch 1 gelöst.

Ferner wird die Aufgabe mit der Anordnung zur rechnergestützten Überwachung eines Energieverbrauchs eines Beförderungsmittels nach Anspruch 10 gelöst.

Das Verfahren und die Anordnung weisen den Vorteil auf, dass der Energieverbrauch des Beförderungsmittels für eine vorgegebene Strecke (beispielsweise die Strecke zwischen zwei Haltestellen) erfasst werden kann. Dies ermöglicht eine Erstellung von Statistiken, welche eine Bewertung des Fahrverhaltens eines Fahrers des Beförderungsmittels erlauben. Denn der Fahrer hat durch sein Fahrverhalten wesentlichen Einfluss auf den Energieverbrauch des Beförderungsmittels, da er über Beschleunigung, Rollen und Bremsen, bzw. allgemein über die Geschwindigkeit des Beförderungsmittels entscheiden kann. Ein weiterer Vorteil besteht darin, dass die Strecken-bezogenen Energieverbrauchsdaten nach ihrer Erfassung vom Beförderungsmittel auf die Landseite übertragen und dort weiter genutzt werden können.

Das Verfahren und die Anordnung bieten den Vorteil, dass die Ausgabe der Energieverbrauchs-Information ein energiesparendes Fahrverhalten des Fahrers unterstützt und motiviert. Auf diese Weise lässt sich ein zusätzliches Potential an Energieeinsparung ausschöpfen. Die fahrzeugseitige Ausgabe der Energieverbrauchs-Information ermöglicht es hierbei, die Energieverbrauchsdaten in Relation zu den Vergleichsdaten zu setzen, so dass dem Fahrer eine sinnvolle Interpretation und Bewertung der Energieverbrauchsdaten ermöglicht wird. Der Fahrer wird schnell informiert und gleichzeitig zu energiesparender Fahrweise motiviert. Hierdurch wird energiesparendes Fahrverhalten gefördert und der Energieverbrauch des Beförderungsmittels gesenkt.

Weitere vorteilhafte Ausführungsformen der Erfindung sind durch die Merkmale der Unteransprüche gekennzeichnet.

Im Folgenden werden Ausführungsbeispiele der Erfindung anhand der Figuren näher erläutert. Es zeigen:
- Figur 1: einen Führerstand in einem Schienenfahrzeug;
- Figur 2: ein Ausführungsbeispiel einer rechnergestützten Überwachung eines Energieverbrauchs eines Beförderungsmittels;
- Figur 3: eine Anzeige einer Energieverbrauchs-Information auf einem visuellen Ausgabemittel gemäß einer ersten Variante;
- Figur 4: eine Anzeige einer Energieverbrauchs-Information auf einem visuellen Ausgabemittel gemäß einer zweiten Variante.

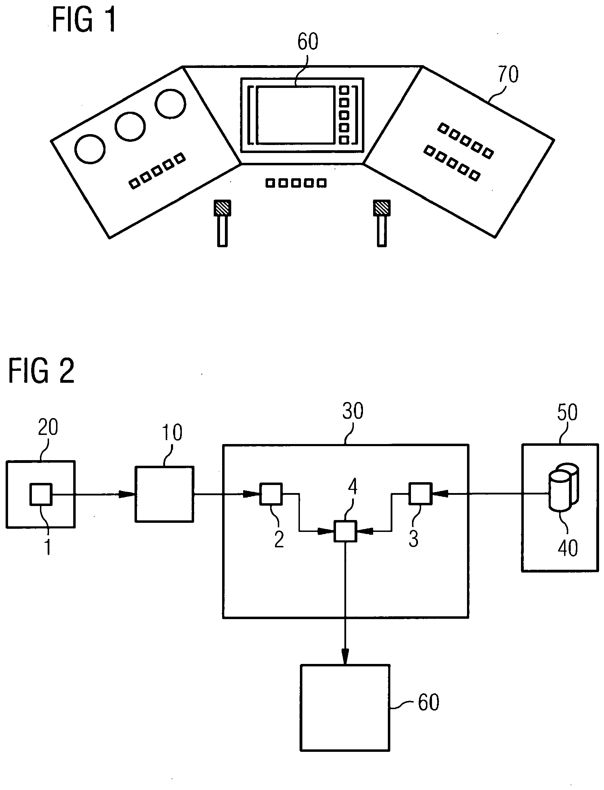

Figur 1 zeigt einen Führerstand 70, wie er sich üblicherweise im Fahrerraum eines Schienenfahrzeugs befindet. Anstelle des Schienenfahrzeugs kommen auch alle anderen Beförderungsmittel wie etwa Linienbusse, LKWs oder auch Flugzeuge und Schiffe in Betracht. Voraussetzung ist jedoch, dass diese wiederholt vorgegebene Strecken befahren. Hierbei muss nicht notwendigerweise das gleiche Beförderungsmittel die Strecke wiederholt befahren, es genügt, wenn die Strecke regelmäßig von baugleichen Beförderungsmitteln etwa aus einer Flotte von Fahrzeugen, Schiffen oder Flugzeugen zurückgelegt wird. Im Fall eines Kraftfahrzeuges würde es sich anstelle des Führerstands 70 dementsprechend um ein Fahrer-Cockpit und im Fall eines Flugzeugs um ein Piloten-Cockpit handeln. Unter einem Fahrer des Beförderungsmittels wird daher im Folgenden ein Zugführer, Kraftfahrer, Kapitän oder Pilot verstanden.

In einem ersten Ausführungsbeispiel handelt es sich bei den zurückgelegten Strecken beispielsweise um Strecken zwischen Haltestellen, etwa im Nahverkehr von U-Bahn, S-Bahn, Linienbussen oder Zügen. Die Strecken können auch zwischen Häfen oder Anlegestellen im Fährenverkehr liegen oder als Flugrouten zwischen Flughäfen vorgegeben sein. Ob das jeweilige Beförderungsmittel Personen oder Güter transportiert, ist hier nicht von Bedeutung. Der Grad der Beladung wird jedoch berücksichtigt, wie im Folgenden noch ausgeführt wird.

Der Führerstand 70 enthält ein Ausgabemittel 60, über welches ein Energieverbrauch an einen Fahrer des Beförderungsmittels ausgegeben wird.

Figur 2 zeigt eine rechnergestützte Überwachung eines Energieverbrauchs des Beförderungsmittels. Hierbei werden von einer Messeinrichtung 20 Messdaten 1 erfasst. Die Messdaten 1 enthalten hierbei beispielsweise einen aktuellen Verbrauch von Diesel, oder bei elektrisch angetriebenen Fahrzeugen aufgenommene Energie und rückgespeiste Energie.

Die Messdaten 1 werden von einer Recheneinheit 30 über eine Schnittstelle 10 empfangen. Bei der Schnittstelle 10 handelt es sich beispielsweise um einen Datenbus, ein kabelgebundenes Netzwerk oder ein drahtloses Netzwerk.

Die Recheneinheit 30 ist beispielsweise als Prozessor, Platine oder Personalcomputer ausgeführt. Sie ermittelt aus den Messdaten 1 Energieverbrauchsdaten 2, die einen Energieverbrauch des Beförderungsmittels auf einer Strecke angeben. Hier bietet es sich an, aus aufgenommener Energie und rückgespeister Energie einen Netto-Energieverbrauch zu ermitteln und in den Energieverbrauchsdaten 2 abzulegen. Der Vorteil besteht hierbei darin, dass die Energieverbrauchsdaten 2 für die Strecke ermittelt werden, da dies einen Vergleich mit vorangegangenen Fahrten auf der Strecke ermöglicht.

Zunächst muss eine Positionsbestimmung des Beförderungsmittels vorgenommen werden, um zu erkennen, wann die Strecke zurückgelegt wurde, und um die Energieverbrauchsdaten 2 der Strecke korrekt zuzuordnen. Die Positionsbestimmung erfolgt beispielsweise über GPS, Galileo, ein Fahrgastinformationssystem, durch manuelle Eingabe eines Fahrers oder durch Balisen.

Im Fall der Positionsbestimmung mittels GPS liegen die Anfangs- und Endpunkte der Strecken als Koordinaten vor. Die aktuell mittels GPS ermittelte Position des Beförderungsmittels wird genau dann einem Anfangs- oder Endpunkt einer Strecke zugeordnet, wenn das Beförderungsmittel steht. Zusätzlich kann überprüft werden, ob die Türen freigegeben sind. Unter diesen Voraussetzungen kann davon ausgegangen werden, dass sich das Beförderungsmittel an einem Anfangs- oder Endpunkt einer Strecke befindet. In einer Datenbank von Strecken wird nun anhand der aktuellen mittels GPS ermittelten Position die jeweilige Strecke ermittelt. Weiterhin wird erfasst, ob sich das Beförderungsmittel an deren Anfangs- oder Endpunkt befindet.

Während das Beförderungsmittel die Strecke zurücklegt, erfolgt eine mathematische Integration über den Messdaten 1, um aus dem fortlaufend gemessenen aktuellen Energieverbrauch den gesamten Energieverbrauch auf der Strecke in Form der Energieverbrauchsdaten 2 zu ermitteln. Bei elektrischen und Hybrid-Antrieben wird hierbei gegebenenfalls zwischen verbrauchter und zurückgespeister Energie unterschieden.

Nach Erkennung des Anfangspunktes einer Strecke als aktueller Position des Beförderungsmittels wird für die Energieverbrauchsdaten 2 ein neuer Energieverbrauchsdatensatz angelegt. Dieser enthält den Anfangspunkt der Strecke, eine Uhrzeit und einen Identifikator des Fahrers, welcher auf dem Beförderungsmittel in der Regel vorliegt. In einem erfindungsgemäßen Beispiel gibt ein weiteres Feld des Energieverbrauchsdatensatzes einen Beladungsgrad des Beförderungsmittels an. Dieser kann beispielsweise mit Hilfe eines Fahrgastzählsystems ermittelt oder durch ein Luftfederungssystem gemessen werden.

Die mathematische Integration der Messdaten 1 wird am Anfangspunkt der Strecke zurückgesetzt. Sobald der Endpunkt der Strecke als aktuelle Position des Beförderungsmittels erkannt wird, wird der Energieverbrauchsdatensatz gesichert und ein neuer Energieverbrauchsdatensatz angelegt, wenn der Endpunkt der Strecke mit dem Anfangspunkt einer weiteren Strecke zusammenfällt. Aus den Energieverbrauchsdatensätzen werden die Energieverbrauchsdaten 2 ermittelt. So können die Energieverbrauchsdaten 2 etwa die Informationen eines oder mehrerer Energieverbrauchsdatensätze oder eine Auswertung derselben enthalten.

Gemäß einer in Figur 2 gezeigten Variante des ersten Ausführungsbeispiels werden Vergleichsdaten 3, die einen Energieverbrauch von Beförderungsmitteln auf vorangegangenen Fahrten auf der Strecke angeben, einer Datenbank 40 in einem Datenspeicher 50 entnommen. Aus einem Vergleich der Energieverbrauchsdaten 2 mit den Vergleichsdaten 3 wird eine Energieverbrauchs-Information 4 gebildet, die mit einem Ausgabemittel 60 an den Fahrer des Beförderungsmittels ausgegeben wird.

Die Datenbank 40 wird vorab erstellt, beispielsweise indem die zuvor beschriebenen Energieverbrauchsdatensätze oder die Energieverbrauchsdaten 2 bei Probefahrten oder im laufenden Betrieb aufgezeichnet und in der Datenbank 40 gespeichert werden. Auf diese Weise kann die Datenbank 40 für das Beförderungsmittel oder eine Flotte von Beförderungsmitteln eine Vielzahl von Energieverbrauchsdatensätzen für die Strecke oder eine Anzahl von Strecken enthalten - etwa alle Strecken zwischen Haltestellen in einem Nahverkehrsnetz.

Im übrigen können die Energieverbrauchsdaten 2 (bzw. die Energieverbrauchsdatensätze) auch bei der aktuellen Fahrt in die Datenbank 40 aufgenommen werden, so dass sie bei zukünftigen Fahrten als Vergleichsdaten 3 nutzbar sind bzw. zur Bildung der Vergleichsdaten 3 (ggf. mittels statistischer Auswertung) herangezogen werden können.

Zusätzlich oder alternativ zu den Energieverbrauchsdatensätzen selbst kann die Datenbank 40 statistische Auswertungen der Energieverbrauchsdatensätze enthalten. Die statistischen Auswertungen enthalten beispielsweise den besten, also niedrigsten Wert des Energieverbrauchs des Beförderungsmittels für die Strecke, weiterhin den schlechtesten, also höchsten Wert, einen Durchschnittswert (etwa das arithmetische Mittel oder den Median), einen Top-Ten-Wert (ein Wert des Energieverbrauchs des zehnten Perzentils der nach aufsteigendem Energieverbrauch sortierten Fahrten auf der Strecke), einen Top-25-Wert (ein Wert des Energieverbrauchs des fünfundzwanzigsten Perzentils der nach aufsteigendem Energieverbrauch sortierten Fahrten auf der Strecke), ggf. ein beliebiges anderes Perzentil, einen Energieverbrauch pro Kilometer, oder einen Energieverbrauch umgerechnet in Gramm CO₂ oder Gramm CO₂ pro Kilometer, oder weitere klimarelevante Einheiten.

Je nach Ausgestaltung des Verfahrens werden als Vergleichsdaten 3 die Energieverbrauchsdatensätze selbst oder die zuvor beschriebenen statistische Auswertungen von Energieverbrauchsdatensätzen aus der Datenbank 40 abgerufen.

Vorzugsweise werden mit den Vergleichsdaten 3 aus der Datenbank 40 Daten abgerufen, welche einen bestimmten Fahrer betreffen. Wünschenswert ist weiterhin, mit den Vergleichsdaten 3 gezielt Daten abzurufen, die einen bestimmten Zeitraum wie etwa ein aktuelles Jahr für einen Jahresbestwert, einen aktuellen Monat für einen Monatsbestwert, eine aktuelle Woche für einen Wochenbestwert oder einen aktuellen Tag für einen Tagesbestwert betreffen. Ferner ist es von Vorteil, wenn die Vergleichsdaten 3 Daten enthalten, die einen bestimmten untertägigen Zeitraum betreffen, beispielsweise Wochentags zwischen 6.30 Uhr und 10.00 Uhr. Dies liegt darin begründet, dass der Energieverbrauch des Beförderungsmittels ggf. mit der Tageszeit korreliert. Stoßzeiten führen zu höherer Beladung und dichteren Taktfolgen im Nahverkehr, so dass in diesen Zeiträumen energiesparendes Fahren nicht im gleichen Maß möglich ist.

Erfindungsgemäß ist es erforderlich, dass die Vergleichsdaten 3 aus der Datenbank 40 Daten enthalten, welche eine gleiche Beladung des Beförderungsmittels betreffen. In diesem Fall müssen die Vergleichsdaten 3 mit einer Information zur Beladung versehen sein, welche wie oben beschrieben als Feld in den Energieverbrauchsdatensätzen vorgesehen werden kann. Im Übrigen sollten die Vergleichsdaten zusätzlich auch die Abfrage beliebiger Kombinationen von Kriterien umfassen, etwa eine Jahres-Bestleistung des Fahrers auf der Strecke in einer Stoßzeit von 15.30 Uhr bis 18.30 Uhr.

Wahlweise wird der Datenspeicher 50 auf dem Beförderungsmittel oder auf der Landseite angeordnet. In letzterem Fall ist die Datenbank 40 also nicht auf dem Beförderungsmittel selbst, sondern in dem Datenspeicher 50 auf der Landseite angeordnet. Dies bietet den Vorteil, dass Energieverbrauchsdatensätze mehrerer Beförderungsmittel, etwa aller Fahrzeuge einer Flotte, an eine zentrale Stelle übermittelt und dort aufbereitet werden. Die Übermittlung erfolgt beispielsweise über Datenfernübertragung oder durch lokales Auslesen von Protokolldateien auf dem Beförderungsmittel. Bei der Aufbereitung handelt es sich um eine statistische Auswertung wie oben beschrieben. Die hierbei ermittelten Vergleichsdaten 3 werden zurück an das Beförderungsmittel übertragen. Die Übertragung kann auf Anforderung, jedoch auch vorab periodisch erfolgen. Diese zentrale Aufbereitung der Energieverbrauchsdatensätze bietet den Vorteil, dass die Vergleichsdaten 3 auch aggregierte Vergleichswerte einer Vielzahl von Fahrern wie etwa einen absoluten Bestwert aller Fahrer auf der Strecke oder einen absoluten Bestwert aller Fahrer auf der Strecke wochentags in einer Stoßzeit von 15.30 Uhr bis 18.30 Uhr enthalten können. Hierbei genügt es, als Vergleichsdaten 3 geeignete Schwellwerte zu übertragen. Es muss daher nicht die gesamte Datenbank 40 auf das Beförderungsmittel übertragen werden.

In einem nächsten Schritt wird aus einem Vergleich der Energieverbrauchsdaten 2 mit den Vergleichsdaten 3 eine Energieverbrauchs-Information 4 gebildet. Dies erfolgt beispielsweise, wenn das Beförderungsmittel den Endpunkt der Strecke erreicht. Anschließend wird die Energieverbrauchs-Information 4 mit einem Ausgabemittel 60 an einen Führer des Beförderungsmittels ausgegeben. Bei dem Ausgabemittel 60 handelt es sich um ein visuelles Ausgabemittel wie einen Bildschirm oder um ein akustisches Ausgabemittel wie Lautsprecher.

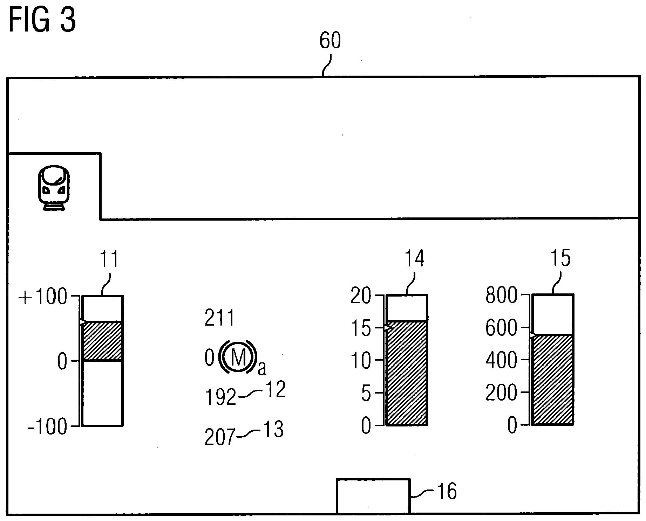

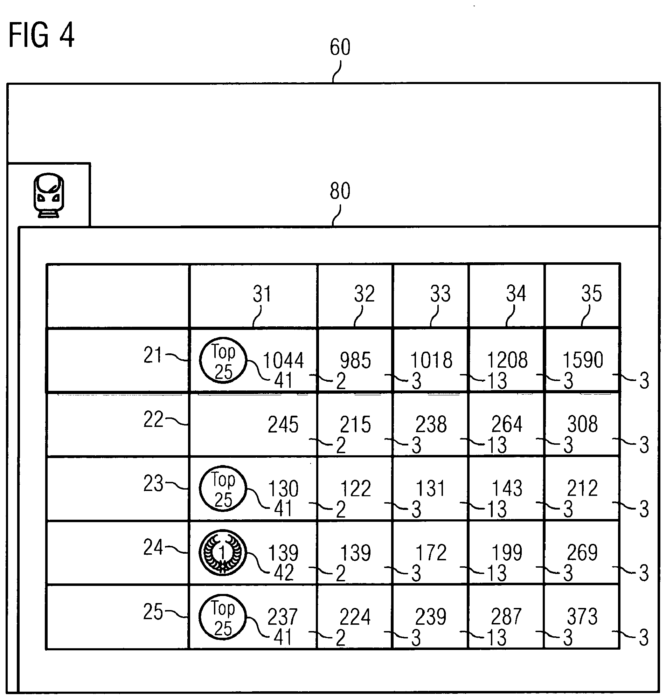

Figur 3 zeigt die Ausgabe der Energieverbrauchs-Information 4 über einen Bildschirm als Ausgabemittel 60. Gezeigt sind unterschiedliche Informationen, welche den Fahrer des Beförderungsmittels über den Energieverbrauch auf dem Laufenden halten. Hierzu wird eine Zug-/Bremskraft 11, ein Netto-Energieverbrauch 12, ein Schwellwert 13, eine Spannung 14 und eine Stromstärke 15 an den Fahrer ausgegeben. Der Netto-Energieverbrauch 12 entspricht hierbei den Energieverbrauchsdaten 2 wie oben beschrieben. Der Schwellwert 13 stellt in diesem Fall den Wert des Energieverbrauchs dar, ab dem die 25% aller Energieverbrauchsdatensätze mit dem geringsten Energieverbrauch beginnen. Da der Netto-Energieverbrauch 12 im gezeigten Beispiel unterhalb des Schwellwerts 13 liegt, befindet sich der Fahrer im gezeigten Fall unter den besten 25% aller Energieverbrauchsdatensätze für den Streckenabschnitt. Die Spannung 14 und Stromstärke 15 betreffen etwa den einer Oberleitung entnommenen Strom. Durch Anwahl einer Schaltfläche 16 erhält der Fahrer weitere Informationen, welche in Figur 4 gezeigt sind.

Figur 4 zeigt erneut als Ausgabemittel 60 einen Bildschirm, der diesmal eine Tabelle 80 anzeigt. Ferner sind ein erstes Symbol 41 und ein zweites Symbol 42 abgebildet. Eine erste Spalte 31 der Tabelle 80 enthält jeweils die Energieverbrauchsdaten 2 für den Fahrer auf seiner aktuellen Fahrt. Eine zweite Spalte 32 enthält jeweils den Bestwert aus den Vergleichsdaten 3. Eine dritte Spalte 33 enthält den bereits in Figur 3 gezeigten Schwellwert 13, welcher ebenfalls in den Vergleichsdaten 3 enthalten ist und den Wert angibt, ab dem die energiesparendsten 25% aller Energieverbrauchsdatensätze beginnen. Eine vierte Spalte 34 enthält jeweils einen Durchschnittswert, welcher in den Vergleichsdaten 3 enthalten ist. Eine fünfte Spalte 35 enthält den schlechtesten Wert, der in den Vergleichsdaten 3 enthalten ist.

Eine erste Zeile 21 in der Tabelle 80 enthält Summenwerte, die über den gesamten Zeitraum gebildet werden, seit der Fahrer seine Fahrt mit dem Beförderungsmittel begonnen hat. Eine zweite Zeile 22 enthält Werte für eine erste Strecke. Eine dritte Zeile 23 enthält Werte für eine zweite Strecke, eine vierte Zeile 24 Werte für eine dritte Strecke und eine fünfte Zeile 25 Werte für eine vierte Strecke. Das erste Symbol 41 zeigt in der ersten Zeile 21, der dritten Zeile 23 und der fünften Zeile 25 an, dass der Fahrer seit Fahrtantritt, aber auch auf der zweiten Strecke und der vierten Strecke einen Energieverbrauch erzielt hat, der innerhalb der besten 25% liegt. Entsprechend ist der Wert in der ersten Spalte 31 jeweils kleiner als der Schwellwert in der dritten Spalte 33. Das zweite Symbol 42 in der vierten Zeile 24 zeigt an, dass der Fahrer auf der dritten Strecke einen Energieverbrauch erzielt hat, der gegenüber den Vergleichsdaten 3 einen Bestwert darstellt.

Neben dem Netto-Energieverbrauch 12 in Figur 3 wird an den Fahrer ausgegeben, dass er die Strecke besonders energiesparend zurückgelegt hat, indem ihm über das erste Symbol 41 angezeigt wird, dass er unter den besten 25% liegt. Das zweite Symbol 42 zeigt ihm an, dass er einen Bestwert erreicht hat. Der Bestwert und die besten 25% können nur im Vergleich mit Energieverbrauchsdatensätzen des gleichen Fahrers, aber auch im Vergleich mit Energieverbrauchsdatensätzen aller anderen Fahrer ermittelt werden. Als Ausgabemittel 60 wird vorzugsweise ein Bildschirm genutzt, der ohnehin bereits am Führerstand des Beförderungsmittels vorhanden ist.

Im in Figur 4 gezeigten Fall werden sowohl numerische als auch graphische Darstellungen der Energieverbrauchs-Information 4 ausgegeben. Die Energieverbrauchs-Information 4 umfasst in dem in Figur 4 gezeigten Fall die gesamte Tabelle 80 mit Vergleichsdaten 3, Energieverbrauchsdaten 2 und dem ersten Symbol 41 sowie dem zweiten Symbol 42. Während die Energieverbrauchsdaten 2 und Vergleichsdaten 3 numerisch ausgegeben werden, ermöglichen die graphischen Symbole eine schnelle Information des Fahrers und dessen Motivation zu energiesparender Fahrweise. Alternativ zu der gezeigten Visualisierung könnte auch ein Symbol wie etwa Daumen nach oben oder eine blühende Sonnenblume gewählt werden. Der Fahrer erfährt so auf einen Blick, dass er eine neue (allgemeine oder persönliche) Bestleistung erzielt hat, oder dass seine Fahrt auf dem Streckenabschnitt zu den besten 10% oder 25% aller Fahrten gehört. Auch schlechte Fahrleistungen lassen sich durch entsprechende Symbole anzeigen (z.B. Daumen nach unten, verwelkende Sonnenblume). Alternativ zur numerischen Darstellung der Energieverbrauchsdaten 2 und Vergleichsdaten 3 könnten diese auch graphisch etwa als Balkendiagramm angezeigt werden. Das erste Symbol 41 und das zweite Symbol 42 werden kontextabhängig eingeblendet, wenn die jeweiligen Kriterien erfüllt sind. Anstelle der Symbole könnte auch Text ausgegeben werden.

Bei der Energieverbrauchs-Information 4 kann es sich lediglich um das erste Symbol 41 oder das zweite Symbol 42 handeln. Alternativ oder ergänzend kann die Energieverbrauchs-Information 4 auch die Vergleichsdaten 3 oder die Energieverbrauchsdaten 2 umfassen. In Figur 4 umfasst die Energieverbrauchs-Information 4 mit der Tabelle 80 alle genannten Bestandteile.

Die Energieverbrauchs-Information 4 kann auch in der Darstellung von Figur 3 erscheinen, etwa als erstes Symbol 41 oder zweites Symbol 42. Dies ermöglicht eine schnelle Erfassung der Energieverbrauchs-Information 4 durch den Fahrer ohne weitere Navigation über die Schaltfläche 16.

In einer Weiterbildung werden für die Bestleistung, die besten 10% oder die besten 25% nur Fahrleistungen gewertet, welche eine fahrplanmäßig vorgeschriebene Fahrzeit nicht überschreiten bzw. sonstige Kriterien einer Fahrplantreue nicht verletzen. Hierdurch wird sichergestellt, dass ein energiesparendes Verhalten des Fahrers nicht auf Kosten der Fahrplantreue angeregt wird. In diesem Zusammenhang bietet sich auch an, durch ein geeignetes Symbol oder Text anzuzeigen, dass eine Fahrt wegen mangelnder Fahrplantreue vom Vergleich ausgeschlossen wurde.

Die in Figur 3 und Figur 4 gezeigte Darstellung ermöglicht es dem Fahrer, den Energieverbrauch sinnvoll zu interpretieren und zu bewerten. Besonders energiesparendes Verhalten wird gefördert. Geeignete graphische Symbole wirken instruktiv und motivierend. Der Fahrer wird informiert, wann sein Fahrverhalten energiesparend wirkt, und durch positive Rückmeldungen motiviert. Dies resultiert in einem Trainingseffekt des Fahrers, welcher es ihm ermöglicht, auch zukünftig gezielt energiesparend zu fahren. Der Gesamtenergieverbrauch des Beförderungsmittels wird hierdurch reduziert.

Die beschriebenen Ausführungsbeispiele lassen sich analog für Beförderungsmittel wie Flugzeuge, Schiffe, Fähren, LKWs oder Linienbusse implementieren. Etwaige externe Einflussfaktoren wie Windgeschwindigkeiten oder Strömungsgeschwindigkeiten sind im jeweiligen Szenario jedoch ggf. durch die Recheneinheit 30 bei der Ermittlung der Energieverbrauchs-Information 4 zu berücksichtigen.

In einer Variante wird das Verfahren iterativ für aufeinanderfolgende Strecken durchgeführt. Hierdurch werden in Figur 4 in der Tabelle 80 die Werte in der ersten Zeile 21 ermittelt. Aus der Summe der für die aufeinanderfolgenden Strecken ermittelten Energieverbrauchsdaten 2 werden Gesamt-Energieverbrauchsdaten gebildet, die einen Energieverbrauch des Beförderungsmittels auf einer Gesamtstrecke angeben, die sich aus den aufeinanderfolgenden Strecken zusammensetzt. Die Gesamt-Energieverbrauchsdaten sind in Figur 4 in der ersten Zeile 21 und der ersten Spalte 31 gezeigt.

Die Gesamtstrecke ist etwa die Summe aller Strecken seit Schichtantritt oder Fahrtantritt des Fahrers. Eine Information, dass ein neuer Fahrer das Beförderungsmittel besetzt hat, ist üblicherweise im System vorhanden, da sich der Fahrer vor Fahrtantritt anmelden muss. Alternativ kann diese Information aus Beobachtung weiterer Zustände erkannt werden, etwa dem Öffnen der Fahrertür an bestimmten Orten. Die Summenbildung über den für die aufeinanderfolgenden Strecken ermittelten Energieverbrauchsdaten 2 kann wahlweise durch die Recheneinheit 30 auf dem Beförderungsmittel oder auf der Landseite erfolgen und dann an das Beförderungsmittel zurückkommuniziert werden. Beispielsweise ergibt sich der Netto-Energieverbrauch auf der Gesamtstrecke dann aus der Summe des Netto-Energieverbrauchs auf den aufeinanderfolgenden Strecken.

Anschließend werden Gesamt-Vergleichsdaten aus der Summe der für die aufeinanderfolgenden Strecken ermittelten Vergleichsdaten 3 gebildet, die einen Energieverbrauch von Beförderungsmitteln auf vorangegangenen Fahrten auf der Gesamtstrecke angeben. Diese Gesamt-Vergleichsdaten sind in Figur 4 in der ersten Zeile 21, von der zweiten Spalte 32 bis zur fünften Spalte 35 abgebildet, während die für die aufeinanderfolgenden Strecken ermittelten Vergleichs-daten 3 in den Zeilen darunter liegen (im vorliegenden Fall wurden noch weitere Strecken berücksichtigt und aufsummiert, die nicht mehr dargestellt sind).

In einem dritten Schritt wird eine aus einem Vergleich der Gesamt-Energieverbrauchsdaten mit den Gesamt-Vergleichsdaten gebildete Gesamt-Energieverbrauchs-Information mit dem Ausgabemittel (60) an den Fahrer des Beförderungsmittels ausgegeben. Bei der Gesamt-Energieverbrauchs-Information handelt es sich hierbei insbesondere um das erste Symbol 41 in der ersten Zeile 21, welches dem Fahrer anzeigt, dass er auf der Gesamtstrecke unter den besten 25% aller Energieverbrauchsdatensätze, die zum Vergleich herangezogen wurden, liegt.

Grundsätzlich kann die Recheneinheit 30 alle erfassten Energieverbrauchsdaten 2 an die Datenbank 40 im Datenspeicher 50 übermitteln, so dass auch die Energieverbrauchsdatensätze der laufenden Fahrt genutzt werden können, um die Datenbank 40 weiter aufzubauen. Weiterhin eignet sich eine solche Übermittlung der Energieverbrauchsdaten 2 auf die Landseite (wenn der Datenspeicher 50 landseitig angeordnet ist) auch zur fahrerbezogenen Auswertung. Diese wird dann als Grundlage für Entscheidungen über weitere Maßnahmen verwendet. Beispielsweise lassen sich bei schlechten Energieverbrauchsdaten 2 Trainingsmaßnahmen zu energiesparendem Fahrverhalten für den Fahrer veranlassen. Trainings-Ressourcen werden daher zielgerichtet allokiert. Weiterhin lassen sich die Energieverbrauchsdaten 2 zur Grundlage für variable Entlohnungsbestandteile verwenden, so dass energiesparendes Fahrverhalten auch finanziell für den Fahrer prämiert wird.

Gemäß einem zweiten Ausführungsbeispiel, welches ergänzend zu dem ersten Ausführungsbeispiel implementiert wird, werden Assistenzdaten ermittelt, die aus Kooperationsdaten und Beschleunigungsdaten bestehen. Die Kooperationsdaten geben an, ob oder mit welcher Verzögerung der Fahrer Anweisungen eines Fahrerassistenzsystems auf der Strecke befolgt hat. Die Beschleunigungsdaten geben die Brems- und Beschleunigungsvorgänge auf der Strecke an. Ferner werden Vergleichs-Assistenzdaten, welche Kooperationsdaten oder Beschleunigungsdaten von Beförderungsmitteln auf vorangegangenen Fahrten auf der Strecke angeben, einer Datenbank entnommen. Abschließend wird eine aus einem Vergleich der Assistenzdaten mit den Vergleichs-Assistenzdaten gebildete Assistenz-Information an den Führer des Beförderungsmittels ausgegeben.

So kann ausgewertet werden, ob Hinweise eines FahrerAssistenzsystems, welches dem Fahrer Hinweise zu energiesparendem Fahrverhalten gibt, berücksichtigt wurden. Auch hierzu können erneut Datensätze in der Datenbank 40 gesammelt und ausgewertet werden. Diese ausgewerteten Daten werden als Vergleichs-Assistenzdaten in der Datenbank 40 bereitgestellt. Aufschluss über energieeffizientes Fahrverhalten bietet die Auswertung der Beschleunigungsdaten, etwa eine Auswertung der Anzahl von Bremsvorgängen, welche unmittelbar von Beschleunigungsvorgängen gefolgt werden.

## Patentansprüche

1. Verfahren zur rechnergestützten Überwachung eines Energieverbrauchs eines Beförderungsmittels, bei dem
- von zumindest einer Messeinrichtung (20) Messdaten (1) empfangen werden, die einen aktuellen Energieverbrauch des Beförderungsmittels angeben,
- aus den Messdaten (1) mithilfe einer Recheneinheit (30) Energieverbrauchsdaten (2) ermittelt werden, die einen Energieverbrauch des Beförderungsmittels auf einer vorgegebenen Strecke angeben,
- Vergleichsdaten (3), die einen Energieverbrauch von Beförderungsmitteln auf vorangegangenen Fahrten auf der Strecke angeben, einer Datenbank (40) entnommen werden,
- die Energieverbrauchsdaten (2) nur mit Vergleichsdaten (3) verglichen werden, die einen Energieverbrauch angeben von Beförderungsmitteln
- auf vorangegangenen Fahrten mit einem Beförderungsmittel mit gleicher Beladung, und
- eine aus dem Vergleich der Energieverbrauchsdaten (2) mit den Vergleichsdaten (3) gebildete Energieverbrauchs-Information (4) mit einem Ausgabemittel (60) an einen Fahrer des Beförderungsmittels ausgegeben wird.

2. Verfahren nach Anspruch 1, bei dem
- die Datenbank (40) in einem Datenspeicher (50) auf dem Beförderungsmittel oder in einem Datenspeicher (50) außerhalb des Beförderungsmittels vorgehalten wird.

3. Verfahren nach Anspruch 1, bei dem
- das Ausgabemittel (60) ein visuelles Ausgabemittel ist.

4. Verfahren nach Anspruch 1, bei dem
- das Beförderungsmittel ein Schienenfahrzeug, ein Linienbus, ein LKW, eine Fähre oder ein Flugzeug ist.

5. Verfahren nach Anspruch 1, bei dem das Verfahren iterativ für aufeinanderfolgende Strecken durchgeführt wird, wobei
- aus der Summe der für die aufeinanderfolgenden Strecken ermittelten Energieverbrauchsdaten (2) Gesamt-Energieverbrauchsdaten gebildet werden, die einen Energieverbrauch des Beförderungsmittels auf einer Gesamtstrecke angeben, die sich aus den aufeinanderfolgenden Strecken zusammensetzt,
- Gesamt-Vergleichsdaten aus der Summe der für die aufeinanderfolgenden Strecken ermittelten Vergleichsdaten (3) gebildet werden, die einen Energieverbrauch von Beförderungsmitteln auf vorangegangenen Fahrten auf der Gesamtstrecke angeben, und
- eine aus einem Vergleich der Gesamt-Energieverbrauchsdaten mit den Gesamt-Vergleichsdaten gebildete Gesamt-Energieverbrauchs-Information mit dem Ausgabemittel (60) an den Fahrer des Beförderungsmittels ausgegeben wird.

6. Verfahren nach Anspruch 1, bei dem
- Assistenzdaten ermittelt werden, bestehend aus
- Kooperationsdaten, welche angeben, ob oder mit welcher Verzögerung der Fahrer Anweisungen eines Fahrerassistenzsystems auf der Strecke befolgt hat, oder
- Beschleunigungsdaten, die Brems- und Beschleunigungsvorgänge auf der Strecke angeben,
- Vergleichs-Assistenzdaten, die Kooperationsdaten oder Beschleunigungsdaten von Beförderungsmitteln auf vorangegangenen Fahrten auf der Strecke angeben, der Datenbank (40) entnommen werden, und
- eine aus einem Vergleich der Assistenzdaten mit den Vergleichs-Assistenzdaten gebildete Assistenz-Information mit dem Ausgabemittel (60) an den Fahrer des Beförderungsmittels ausgegeben wird.

7. Verfahren nach Anspruch 1,
- bei dem die Energieverbrauchsdaten (2) in die Datenbank (40) aufgenommen werden, so dass sie bei zukünftigen Fahrten als Vergleichsdaten (3) verwendet werden können.

8. Computerlesbarer Datenträger,
- auf dem ein Computerprogramm gespeichert ist, welches das Verfahren nach einem der vorangegangenen Ansprüche ausführt, wenn es in der Recheneinheit (30) abgearbeitet wird.

9. Computerprogramm,
- welches in der Recheneinheit (30) abgearbeitet wird und dabei das Verfahren nach einem der Ansprüche 1 bis 7 ausführt.

10. Anordnung zur rechnergestützten Überwachung eines Energieverbrauchs eines Beförderungsmittels,
- mit einer Schnittstelle (10), ausgelegt zum Empfang von Messdaten (1) von zumindest einer Messeinrichtung (20), die einen aktuellen Energieverbrauch des Beförderungsmittels angeben,
- mit einem Datenspeicher (50), der eine Datenbank (40) enthält, welche Vergleichsdaten (3) enthält, die einen Energieverbrauch des Beförderungsmittels auf vorangegangenen Fahrten auf einer vorgegebenen Strecke angeben,
- mit einer Recheneinheit (30),
- programmiert zur Ermittlung von Energieverbrauchsdaten (2) aus den Messdaten (1), wobei die Energieverbrauchsdaten (2) einen Energieverbrauch des Beförderungsmittels auf der Strecke angeben,
- programmiert, um die Energieverbrauchsdaten (2) nur mit Vergleichsdaten (3) zu vergleichen, die einen Energieverbrauch angeben von Beförderungsmitteln
- auf vorangegangenen Fahrten mit einem Beförderungsmittel mit gleicher Beladung, und
- programmiert, um aus dem Vergleich der Energieverbrauchsdaten (2) mit den Vergleichsdaten (3) eine Energieverbrauchs-Information (4) zu bilden, und
- mit einem Ausgabemittel (60), eingerichtet zur Ausgabe der Energieverbrauchs-Information (4) an einen Fahrer des Beförderungsmittels.

## Claims

1. Method for computer-supported monitoring of an energy consumption of a means of transportation, in which
- measurement data (1) is received by least one measurement device (20) which specifies the current energy consumption of the means of transportation,
- energy consumption data (2) is determined from the measurement data (1) with the aid of a processing unit (30) which specifies an energy consumption of the means of transportation on a predetermined route,
- comparison data (3), which specifies an energy consumption of means of transportation on previous journeys on the route is retrieved from a database (40),
- the energy consumption data (2) is only compared with comparison data (3) which specifies an energy consumption of means of transportation
- on previous journeys with a means of transportation with the same loading, and
- energy consumption information (4) formed from the comparison of the energy consumption data (2) with the comparison data (3) is output with the output means (60) to a driver of the means of transportation.

2. Method according to claim 1, in which
- the database (40) is kept in a data memory (50) on the means of transportation or in a data memory (50) external to the means of transportation.

3. Method according to claim 1, in which
- the output means (60) is a visual output means.

4. Method according to claim 1, in which
- the means of transportation is a rail vehicle, a public bus, a truck, a ferry or an aircraft.

5. Method according to claim 1, in which the method is carried out iteratively for consecutive routes, wherein
- overall energy consumption data is formed from the sum of the energy consumption data (2) data determined for the consecutive routes, which specifies an energy consumption of the means of transportation on a main overall route which is made up of the consecutive routes,
- overall comparison data is formed from the sum of the comparison data (3) determined for the consecutive routes, which specifies an energy consumption of means of transportation on previous journeys on the overall route, and
- overall energy consumption information formed from a comparison of the overall energy consumption data with the overall comparison data is output with the output means (60) to the driver of the means of transportation.

6. Method according to claim 1, in which
- assistance data is determined, consisting of
- cooperation data which specifies whether or with what delay the driver has followed instructions of a driver assistance system on the route, or
- acceleration data which specifies braking and acceleration processes on the route,
- comparison assistance data, which specifies cooperation data or acceleration data of means of transportation on previous journeys on the route, is taken from the database (40), and
- assistance information formed from a comparison of the assistance data with the comparison assistance data is output with the output means (60) to the driver of the means of transportation.

7. Method according to claim 1
- in which the energy consumption data (2) is accepted into the database (40) so that it can be used in future journeys as comparison data (3).

8. Computer-readable data carrier
- on which a computer program is stored which executes the method according to one of the preceding claims when it is processed in the processing unit (30).

9. Computer program,
- which is processed in the processing unit (30) and in doing so executes the method according to one of claims 1 to 7.

10. Arrangement for computer-supported monitoring of an energy consumption of a means of transportation,
- with an interface (10) designed for receiving measurement data (1) from a least one measurement device (20) which specifies a current energy consumption of the means of transportation,
- with a data memory (50) which contains a database (40) which contains comparison data (3) which specifies an energy consumption of the means of transportation on previous journeys on a predetermined route,
- with a processing unit (30)
- programmed for determining energy consumption data (2) from the measurement data (1), wherein the energy consumption data (2) specifies an energy consumption of the means of transportation on the route,
- programmed to only compare the energy consumption data (2) with comparison data (3) which specifies an energy consumption of means of transportation
- on previous journeys with a means of transportation with the same loading, and
- programmed to form energy consumption information (4) from the comparison of the energy consumption data (2) with the comparison data (3), and
- with an output means (60), configured for output of energy consumption information (4) to a driver of the means of transportation.

## Revendications

1. Procédé de surveillance assistée par ordinateur de la consommation d'énergie d'un moyen de transport, dans lequel
- on reçoit d'au moins un dispositif de mesure (20) des données de mesure (1) qui indiquent une consommation d'énergie actuelle du moyen de transport,
- on détermine à partir des données de mesure (1), à l'aide d'une unité de calcul (30), des données de consommation d'énergie (2), qui indiquent une consommation d'énergie du moyen de transport sur une section prédéterminée,
- on prélève dans une banque de données (40) des données de comparaison (3), qui indiquent une consommation d'énergie de moyens de transport pour des trajets antérieurs sur la section,
- on compare les données de consommation d'énergie (2) uniquement avec des données de comparaison (3), qui indiquent une consommation d'énergie de moyens de transport
- pour des trajets antérieurs avec un moyen de transport de même charge, et
- on communique à un conducteur du moyen de transport, avec un moyen de sortie (60), une information de consommation d'énergie (4) formée à partir de la comparaison des données de consommation d'énergie (2) avec les données de comparaison (3).

2. Procédé selon la revendication 1, dans lequel
- on fournit la banque de données (40) dans une mémoire de données (50) sur le moyen de transport ou dans une mémoire de données (50) à l'extérieur du moyen de transport.

3. Procédé selon la revendication 1, dans lequel
- le moyen de sortie (60) est un moyen de sortie visuel.

4. Procédé selon la revendication 1, dans lequel
- le moyen de transport est un véhicule ferroviaire, un autocar de ligne, un camion, un bac ou un avion.

5. Procédé selon la revendication 1, dans lequel on exécute le procédé de façon itérative sur des sections successives, dans lequel
- on forme, à partir de la somme des données de consommation d'énergie (2) déterminées pour les sections successives, des données de consommation d'énergie totale, qui indiquent une consommation d'énergie du moyen de transport sur une section totale, qui se compose des sections successives,
- on forme, à partir de la somme des données de comparaison (3) déterminées pour les sections successives, des données de comparaison totale, qui indiquent une consommation d'énergie de moyens de transport pour des trajets antérieurs sur la section totale, et
- on communique au conducteur du moyen de transport, avec le moyen de sortie (60), une information de consommation d'énergie totale formée à partir d'une comparaison des données de consommation d'énergie totale avec les données de comparaison totale.

6. Procédé selon la revendication 1, dans lequel
- on détermine des données d'assistance, se composant de
- données de coopération, qui indiquent si ou avec quel retard le conducteur a suivi les instructions d'un système d'assistance à la conduite sur la section, ou
- de données d'accélération, qui indiquent des opérations de freinage et d'accélération sur la section,
- on prélève dans la banque de données (40) des données d'assistance de comparaison, qui indiquent des données de coopération ou des données d'accélération de moyens de transport pour des trajets antérieurs sur la section, et
- on communique au conducteur du moyen de transport, avec le moyen de sortie (60), une information d'assistance formée à partir d'une comparaison des données d'assistance avec les données d'assistance de comparaison.

7. Procédé selon la revendication 1,
- dans lequel on enregistre les données de consommation d'énergie (2) dans la banque de données (40), de telle manière qu'elles puissent être utilisées comme données de comparaison (3) pour des trajets futurs.

8. Support de données lisible par ordinateur,
- sur lequel est stocké un programme informatique, qui exécute le procédé selon l'une quelconque des revendications précédentes, lorsqu'il est exécuté dans l'unité de calcul (30).

9. Programme informatique,
- qui est exécuté dans l'unité de calcul (30) et qui exécute le procédé selon l'une quelconque des revendications 1 à 7.

10. Dispositif pour la surveillance assistée par ordinateur d'une consommation d'énergie d'un moyen de transport,
- avec une interface (10), conçue pour la réception de données de mesure (1) d'au moins un dispositif de mesure (20), qui indiquent une consommation d'énergie actuelle du moyen de transport,
- avec une mémoire de données (50), qui contient une banque de données (40), laquelle contient des données de comparaison (3) qui indiquent une consommation d'énergie du moyen de transport pour des trajets antérieurs sur une section prédéterminée,
- avec une unité de calcul (30),
- programmée pour la détermination de données de consommation d'énergie (2) à partir des données de mesure (1), dans lequel les données de consommation d'énergie (2) indiquent une consommation d'énergie du moyen de transport sur la section,
- programmée pour comparer les données de consommation d'énergie (2) uniquement avec des données de comparaison (3), qui indiquent une consommation d'énergie de moyens de transport
- pour des trajets antérieurs avec un moyen de transport de même charge, et
- programmée pour former une information de consommation d'énergie (4) à partir de la comparaison des données de consommation d'énergie (2) avec les données de comparaison (3), et
- avec un moyen de sortie (60), conçu pour communiquer l'information de consommation d'énergie (4) à un conducteur du moyen de transport.
